(19) **Europäisches Patentamt / European Patent Office / Office européen des brevets**

(11) **EP 1 288 078 B1**

(12) **EUROPÄISCHE PATENTSCHRIFT**

(45) Veröffentlichungstag und Bekanntmachung des Hinweises auf die Patenterteilung:
**24.04.2013 Patentblatt 2013/17**

(51) Int Cl.:
***B60R 16/03*** *(2006.01)*

(21) Anmeldenummer: **02016071.9**

(22) Anmeldetag: **19.07.2002**

(54) **Versorgungsleitungsstruktur zur Energieversorgung von elektrischen Komponenten eines Kraftfahrzeuges**

Supply line structure for power supply of electrical components in a vehicle

Structure de réseau de distribution pour l'alimentation d'énergie de composants électriques dans une voiture

(84) Benannte Vertragsstaaten:
**DE ES FR GB IT SE**

(30) Priorität: **31.08.2001 DE 10142410**

(43) Veröffentlichungstag der Anmeldung:
**05.03.2003 Patentblatt 2003/10**

(73) Patentinhaber: **ROBERT BOSCH GMBH**
**70442 Stuttgart (DE)**

(72) Erfinder:
• **Enders, Thorsten**
**71665 Vaihingen (DE)**
• **Schirmer, Juergen**
**69124 Heidelberg (DE)**
• **Stiegler, Frank**
**76168 Karlsruhe (DE)**
• **Kuehn, Timo**
**76470 Oetigheim (DE)**
• **Dostert, Klaus**
**67706 Krickenbach (DE)**

(56) Entgegenhaltungen:
**DE-A- 4 235 616**

• **STIEGLER F ET AL: "KONZEPT EINER NEUARTIGEN BORDNETZSTRUKTUR FUER DEN EINSATZ VON POWERLINE-KOMMUNIKATION IM KFZ A NOVEL SUPPLY NETWORK ARCHITECTURE FOR POWERLINE COMMUNICATIONS IN AUTOMOBILES" FREQUENZ, SCHIELE UND SCHON GMBH. BERLIN, DE, vol. 56, no. 5/6, May 2002 (2002-05), pages 126-132, XP001115783 ISSN: 0016-1136**

**Beschreibung**

Die vorliegende Erfindung betrifft eine Versorgungsleitungsstruktur zur Energieversorgung von elektrischen Komponenten eines Kraftfahrzeugs und zur Übertragung von Informationen zwischen zumindest einem Teil der Komponenten.

Stand der Technik

In einem Kraftfahrzeug findet nach dem Stand der Technik die Kommunikation zwischen verschiedenen elektrischen Komponenten, wie bspw. Türsteuergerät und Sitzsteuergerät, in der Regel mittels eines Bussystems (z.B. Controller Area Network, CAN) statt. Darüber hinaus sind zur Zeit neue Buskonzepte in der Entwicklung, bei denen die Kommunikation zwischen den elektrischen Komponenten über eine Versorgungsleitungsstruktur erfolgen soll, die zur Energieversorgung der elektrischen Komponenten in dem Kraftfahrzeug vorgesehen ist. Dieses neue Buskonzept wird auch als Powerline Communications bezeichnet. Die Powerline Communications kann mit den heute in Kraftfahrzeugen vorhandenen Versorgungsleitungsstrukturen nur eingeschränkt betrieben werden, da die über die Versorgungsleitungsstruktur zu übertragenden Informationen auf Grund von Störungen und Reflexionen stark gedämpft bei der empfangenden Komponente ankommen bzw. sogar gar nicht mehr von Stör- oder Rauschsignalen unterschieden werden können.

Aus der WO 92/21180 ist eine Versorgungsleitungsstruktur für Powerline Communications bekannt. In dieser Druckschrift wird ganz allgemein die Funktionsweise einer Powerline Communications erläutert und werden Lösungen für verschiedene Probleme angesprochen, die bei der Realisierung einer Powerline Communications auftreten können. Auf diese Druckschrift wird hinsichtlich des Aufbaus einer Versorgungsleitungsstruktur für eine Powerline Communications und hinsichtlich der Funktionsweise einer Powerline Communications ausdrücklich Bezug genommen.

Darüber hinaus ist aus der DE 197 03 144 C2 ein Verfahren zur Übertragung von Informationen in einem Kraftfahrzeug über eine Versorgungsleitungsstruktur bekannt. Die dort beschriebene Powerline Communications ist auf den Einsatz für elektrische Komponenten einer Rückfahrhilfe eines Kraftfahrzeugs beschränkt. Für die Powerline Communications wird die in dem Kraftfahrzeug bereits vorhandene Versorgungsleitungsstruktur ohne besondere Veränderungen oder Anpassungen an die Powerline Communications verwendet.

Schließlich ist aus der DE 39 36 894 A1 ein Bussystem zur Übertragung von Informationen zwischen elektrischen Komponenten eines Kraftfahrzeugs bekannt. Das Bussystem kann auch eine Sternstruktur aufweisen. Denkbar ist aber auch ein T-förmiges oder ein ringförmiges Netzwerk. In dieser Druckschrift wird ein besonders einfach aufgebautes, aber dennoch zuverlässiges Bussystem vorgeschlagen. Eine Anpassung der Leitungsstruktur an bestimmte Randbedingungen bei der Informationsübertragung wird nicht angesprochen. Eine solche Anpassung ist bei dem beschriebenen Bussystem auch nicht erforderlich, da diese besonderen Randbedingungen nur bei einer Powerline Communications über eine bestehende Versorgungsleitungsstruktur vorliegen.

Die DE 42 35 616 A1 zeigt eine Optimierungslösung einer Datenkommunikationsstruktur bei Kraftfahrzeugen, bei welcher die Übertragungsleitungen sternförmig in einem passiven Netzknoten verbunden sind.

Der vorliegenden Erfindung liegt die Aufgabe zu Grunde, eine Versorgungsleitungsstruktur eines Kraftfahrzeugs derart auszugestalten, dass eine möglichst ungestörte Übertragung von Informationen zwischen elektrischen Komponenten, die von der Versorgungsleitungsstruktur mit Energie versorgt werden, zu gewährleisten. Insbesondere sollen in der Versorgungsleitungsstruktur auftretende Reflexionen unterbunden werden, wobei die Energieversorgung der elektrischen Komponenten über die Versorgungsleitungsstruktur weiterhin gewährleistet sein soll.

Zur Lösung dieser Aufgabe schlägt die Erfindung ausgehend von der Versorgungsleitungsstruktur der eingangs genannten Art vor, dass die Versorgungsleitungen in einer Sternstruktur mit mindestens einem Sternpunkt angeordnet sind, wobei der oder jeder Sternpunkt eine Impedanz aufweist, die dem Wellenwiderstand der einzelnen in ihn einlaufenden Versorgungsleitungszweige entspricht.

Vorteile der Erfindung

Es hat sich gezeigt, dass im Rahmen der Einführung von Powerline Communications innerhalb eines Kraftfahrzeugs als Konzept für die Übertragung von Informationen zwischen einzelnen elektrischen Komponenten des Kraftfahrzeugs sich die Umstrukturierung der vorliegenden Versorgungsleitungsstruktur (Kabelbaum) zur Verbesserung der Kanaleigenschaften (konstanter Dämpfungsverlauf und möglichst geringe Reflexionen) als sinnvoll erweist. Durch die verbesserten Kanaleigenschaften wird die Informationsübertragung vorhersehbar und besser berechenbar. Die Auslegung der Versorgungsleitungsstruktur kann dadurch auf die Übertragung von Informationen optimiert werden, ohne dass die Energieversorgung der angeschlossenen Komponenten über die Versorgungsleitungsstruktur beeinträchtigt wird. Informationen können so relativ problemlos über die Versorgungsleitungsstruktur des Kraftfahrzeugs zwischen den elektrischen Komponenten übertragen werden.

Erfindungsgemäß ist erkannt worden, dass sich die Kanaleigenschaften besonders gut verbessern lassen, wenn die Versorgungsleitungen in einer Sternstruktur mit einem oder mehreren Sternpunkten angeordnet sind. Zur Vermeidung von Reflexionen an einem Sternpunkt muss dieser eine Impedanz aufweisen, die dem Wellenwiderstand der einzelnen in ihn einlaufenden Versorgungsleitungszweige entspricht.

An dem oder jedem Sternpunkt ist in den einlaufenden Versorgungsleitungszweigen ein zusätzlicher Serienwiderstand angeordnet. Durch einen in einem Zweig angeordneten zusätzlichen Serienwiderstand kann der Reflexionsfaktor des Zweiges deutlich verringert und unter Umständen sogar auf Null reduziert werden.

Der Serienwiderstand weist in allen Versorgungsleitungszweigen den gleichen Widerstandswert auf. Diese Ausführungsform geht von dem angepassten Fall aus, wonach sämtliche Versorgungsleitungszweige mit ihren Wellenwiderständen abgeschlossen sind. Außerdem wird vorausgesetzt, dass alle Leitungen den gleichen Wellenwiderstand besitzen. Diese Vereinfachung kann ohne weiteres vorgenommen werden, da diese Randbedingungen in einer Versorgungsleitungsstruktur durch geeignete Maßnahmen auf relativ einfache Weise erfüllt werden können.

Vorteilhafterweise ergibt sich der Wert des Serienwiderstandes an dem Sternpunkt aus der Gleichung:

$$r^{*}_{Stern} = \frac{Z_{serie} \cdot n + Z_L \, (2-n)}{Z_{serie} \cdot n + Z_L \cdot n} .$$

mit einem Reflexionsfaktor $r^{*}_{Stern}$ und einer Anzahl n Versorgungsleitungszweigen, die in den Sternpunkt einlaufen, wobei sich der Reflexionsfaktor an einem Versorungsleitungszweig, in dem eine hinlaufende Welle verläuft, und unter Berücksichtigung des Serienwiderstands in diesem Zweig ergibt. Im Sinne der vorliegenden Erfindung muss der Reflexionsfaktor möglichst klein gewählt werden.

Wird der Reflexionsfaktor auf Null reduziert, was den Idealfall darstellt, ergibt sich der Wert des Serienwiderstandes an einem Sternpunkt aus der Gleichung:

$$Z_{serie} = Z_L \cdot \frac{n-2}{n}$$

Der Serienwiderstand ist für Gleichspannung, insbesondere unterhalb einer Frequenz von 100 MHz, frequenzabhängig. Der Serienwiderstand weist bei einer Frequenz 0 Hz einen sehr kleinen Widerstandswert, vorzugsweise 0 Ohm, und in einem für eine Powerline Communications interessanten Frequenzbereich, in einem Frequenzbereich oberhalb von 100 MHz, einen Widerstandwert gemäß Anspruch 4 oder 5 auf. In dem Frequenzbereich von 100 MHz bis etwa 250 MHz ist der Widerstandswert nahezu konstant sein.

Schließlich wird vorgeschlagen, dass der Serienwiderstand als mindestens eine Ferrithülse ausgebildet ist, die im Bereich des Sternpunkts um die Verbindungsleitung herum angeordnet ist. Entscheidend ist, dass ein Ferrit um die Leitung herum angeordnet ist. Ob der Ferrit hülsenförmig oder anders ausgebildet ist, ist nur von untergeordneter Bedeutung.

Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüche oder der Rückbeziehung sowie unabhängig von ihrer Formulierung bzw. Darstellung in der Beschreibung bzw. in der Zeichnung. Es zeigen:

Figur 1    eine Anpassschaltung zum Anschluss einer elektrischen Komponente eines Kraftfahrzeugs an eine Versorgungsleitungsstruktur zur Energieversorgung der Komponenten;

Figur 2    ein Ersatzschaltbild einer erfindungsgemäßen Versorgungsleitungsstruktur mit n-Verzweigungen;

Figur 3    ein Ersatzschaltbild eines symmetrischen T-Glieds;

Figur 4    ein Serien-Ersatzschaltbild einer realen Spule;

Figur 5      einen Aufbau eines Kraftfahrzeug-Bordnetzes mit der erfindungsgemäßen Versorgungsleitungsstruktur gemäß einer bevorzugten Ausführungsform;

Figur 6      eine Übertragungsfunktion und einen Phasenverlauf einer Messung des Kraftfahrzeug-Bordnetzes aus Figur 5; und

Figur 7      die Übertragungsfunktion und den Phasenverlauf aus Figur 6 in Abhängigkeit einer Gleichstrombelastung des Bordnetzes.

Beschreibung der Ausführungsbeispiele

Die vorliegende Erfindung betrifft eine Versorgungsleitungsstruktur (sog. Bordnetz) zur Energieversorgung von elektrischen Komponenten eines Kraftfahrzeugs. Um die Versorgungsleitungsstruktur für die Übertragung von Informationen (sog. Powerline Communications) zu optimieren, ohne dabei jedoch die Energieversorgung der Komponenten zu beeinträchtigen, schlägt die Erfindung eine Umgestaltung der Versorgungsleitungsstruktur in eine Sternstruktur mit einem oder mehreren Sternpunkten vor. Der oder jeder Sternpunkt weist eine Impedanz auf, die dem Wellenwiderstand der einzelnen in dem Sternpunkt einlaufenden Versorgungsleitungszweige entspricht.

Den Kern der Erfindung bildet die Verwendung von Ferritkernen zur Erzeugung einer frequenzabhängigen Impedanz des Sternpunktes. Für Gleichspannung ergibt sich die Impedanz des Sternpunktes zu 0 Ohm, was bedeutet, dass die Gleichspannungsversorgung der angeschlossenen Komponenten auch weiterhin ohne zusätzlichen Spannungsabfall realisiert werden kann. Für Frequenzen oberhalb 100 MHz ergibt sich eine Impedanz mit konstantem Wirkanteil und vernachlässigbarem Blindanteil. Der Wirkanteil kann für eine Anpassung des Sternpunktes an den Wellenwiderstand der innerhalb des Kabelbaums verwendeten Leitungen genutzt werden. Dadurch werden oberhalb 100 MHz Reflexionen am Sternpunkt vermieden.

Mit der Verwendung des modifizierten Sternpunktes verbinden sich die folgenden Vorteile für ein mögliches Übertragungssystem basierend auf dem Prinzip der Powerline Communication:

-   Symmetrischer Aufbau des Kabelbaums
-   Selektivität der angeschlossenen Komponenten
-   einfache Integration neuer Komponenten
-   konstante Übertragungsfunktion im Bereich von 100 bis 250 MHz
-   linearer Phasenverlauf im Bereich von 100 bis 250 MHz
-   keine Gleichspannungsverluste
-   der Wellenwiderstand der Verbindungsleitungszweige ist sowohl unabhängig von der Leitungslänge als auch unabhängig von der Lage der verwendeten Leiter innerhalb des Kraftfahrzeugs.

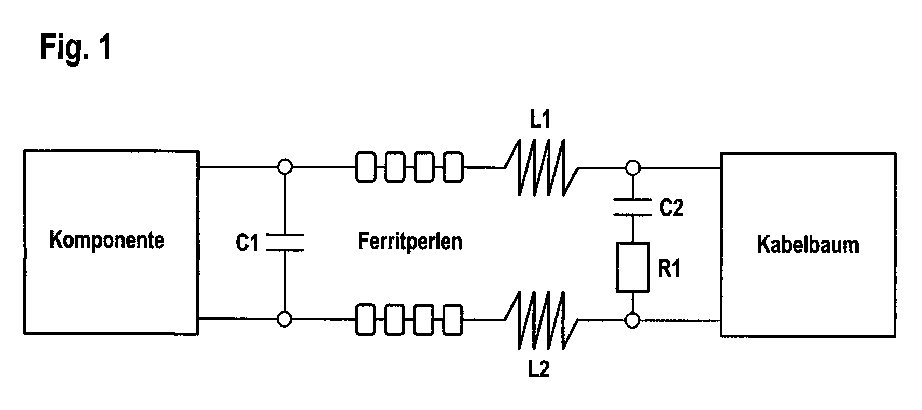

Im Rahmen der Einführung der Powerline Communications innerhalb eines Kraftfahrzeugs als Konzept für die Übertragung von Informationen zwischen einzelnen elektrischen Komponenten des Kraftfahrzeugs erweist sich die Umstrukturierung der bestehenden Versorgungsleitungsstruktur als sinnvoll. Möglichkeiten sind hierbei die Verwendung von Anpassschaltungen für die angeschlossenen Komponenten, die Verwendung von Twisted-Pair-Leitungen und die betragsmäßige Reduzierung von Reflexionen durch die Reduktion der Anzahl der Verzweigungen. In Figur 1 ist eine mögliche Realisierung einer solchen Anpassschaltung dargestellt. Zur Verbesserung der Kanaleigenschaften sind die Versorgungsleitungen in einer Sternstruktur angeordnet. Dadurch läßt sich ein konstanter Dämpfungsverlauf und eine Verringerung der Reflexionen erzielen. Zur Verbesserung der Störfestigkeit werden Twisted-Pair-Leitungen für die Versorgungsleitungen verwendet.

Es hat sich gezeigt, dass die Verwendung von verdrillten Doppeladern (sog. Twisted-Pair-Leitungen) als Leitermedien entscheidende Vorteile, insbesondere eine deutliche Verbesserung der Störfestigkeit, mit sich bringt. Diese weisen abhängig von ihrem Verdrillungsgrad unterschiedliche Wellenwiderstände auf. Bei der für den Einsatz bei Powerline Communications sinnvollen Schlaglänge (Steighöhe bei der Verseilung von symmetrischen Kabelpaaren bezogen auf 1 m) begibt sich für Kabel unterschiedlicher Querschnitte in einer hinreichend genauen Näherung ein Wellenwiderstand von etwa 100 Ohm. Zur Vermeidung von Reflexionen an einem Sternpunkt muss der Sternpunkt eine Impedanz aufweisen, die dem Wellenwiderstand der einzelnen in ihn einlaufenden verdrillten Doppeladern entspricht.

Der Sternpunkt einer Sternstruktur besitzt in Folge der Parallelschaltung mehrerer Abzweige im Allgemeinen eine niedrigere Impedanz als der Wellenwiderstand der Leitungen. Daher treten am Sternpunkt Reflexionen auf. Sind sämtliche Leitungen mit ihrem Wellenwiderstand $Z_L$ abgeschlossen, so "sieht" die zum Sternpunkt hinlaufende Welle den Sternpunkt als Impedanz $Z_{Stern}$, die sich aus der Parallelschaltung der verbleibenden Abzweige ergibt. Im angepassten Fall (sämtliche Leitungsabzweige sind mit ihren Wellenwiderständen $Z_L$ abgeschlossen) und unter der Voraussetzung, dass alle Versorgungsleitungen den gleichen Wellenwiderstand $Z_L$ besitzen, ergibt sich somit die Sternimpedanz

$Z_{Stern}$ für eine n-Verzweigung zu.

$$Z_{Stern} = \frac{Z_L}{(n-1)} \quad f\ddot{u}r \ n \geq 2 \qquad (1)$$

Der Reflexionsfaktor am Sternpunkt $r_{Stern}$ errechnet sich damit zu:

$$r_{Stern} = \frac{Z_{Stern} - Z_L}{Z_{Stern} + Z_L} = \frac{2-n}{n} \quad f\ddot{u}r \ n \geq 2 \qquad (2)$$

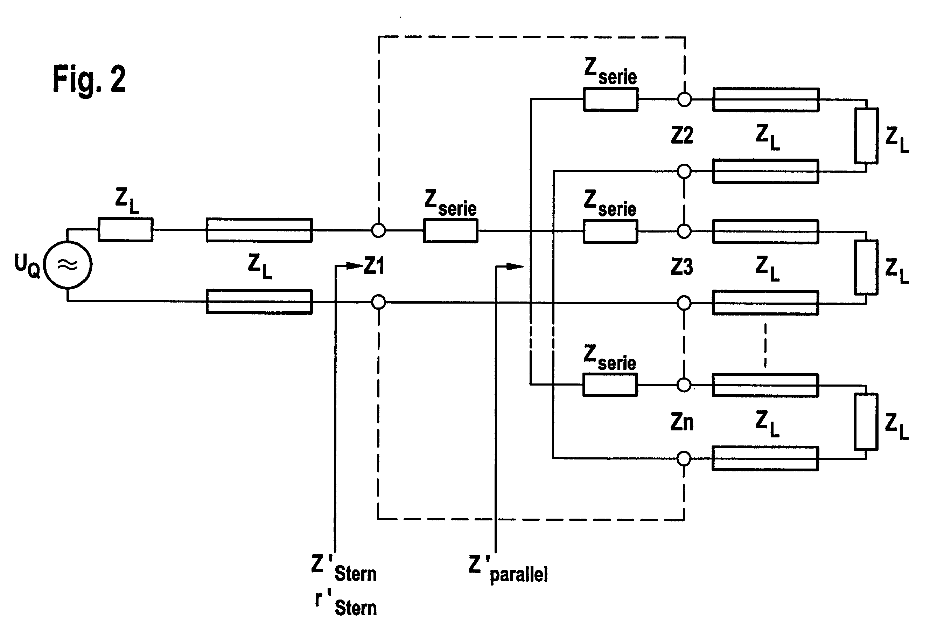

Wie man aus Gleichung (2) erkennen kann, nimmt der Betrag des Reflexionsfaktors $r_{Stern}$ mit steigender Anzahl n an Verzweigungen zu. Der Reflexionsfaktor $r_{Stern}$ soll erfindungsgemäß minimiert, vorzugsweise auf Null reduziert, werden, da hierfür keine Reflexionen auftreten. Dies wird dadurch erreicht, dass direkt am Sternpunkt in jeden einzelnen der Versorgungsleitungszweige Z1, Z2, Z3, Zn ein zusätzlicher Serienwiderstand $Z_{Serie}$ eingesetzt wird. Das Ersatzschaltbild eines derart modifizierten Sternpunktes einer n-Verzweigung ist in Figur 2 zur Veranschaulichung dargestellt.

Damit ergibt sich für die Parallelschaltung der verbleibenden Abzweige (alle Abzweige bis auf den, in dem die hinlaufende Welle verläuft, die Impedanz $Z^*_{parallel}$:

$$Z^*_{parallel} = \frac{Z_L + Z_{serie}}{(n-1)} \quad f\ddot{u}r \ n \geq 2 \qquad (3)$$

Für die neue Sternimpedanz $Z^*_{Stern}$ muss außerdem noch derjenige Serienwiderstand $Z_{Serie}$ berücksichtigt werden, der sich in dem Abzweig befindet, in dem die hinlaufende Welle verläuft. Damit ergibt sich für die neue Sternimpedanz $Z^*_{Stern}$:

$$Z^*_{Stern} = Z^*_{parallel} + Z_{serie} = \frac{Z_L + Z_{serie}}{(n-1)} + Z_{serie} \quad f\ddot{u}r \ n \geq 2 \qquad (4)$$

Bzw. für den neuen Reflexionsfaktor $r^*_{Stern}$ am neuen "Sternpunkt":

$$r^*_{Stern} = \frac{Z^*_{Stern} - Z_L}{Z^*_{Stern} + Z_L} = \frac{Z_{serie} \cdot n + Z_L \cdot (2-n)}{Z_{serie} \cdot n + Z_L \cdot n} \quad f\ddot{u}r \ n \geq 2 \qquad (5)$$

Da der Reflexionsfaktor $r^*_{Stern}$ zu Null werden soll, folgt aus Gleichung (5) die Forderung für den zusätzlichen Serienwiderstand $Z_{Serie}$ für eine n-Verzweigung:

$$Z_{serie} = Z_L \cdot \frac{(n-2)}{n} \quad f\ddot{u}r \ n \geq 2 \qquad (6)$$

Da in jedem Zweig des modifizierten Sternpunkts der gleiche Serienwiderstand $Z_{Serie}$ eingesetzt wird, ist keine bevorzugte Datenübertragungsrichtung zu berücksichtigen. Das bedeutet, dass prinzipiell an jedem Abzweig die zum Sternpunkt hinlaufende Welle auftreten darf, ohne dass diese eine Reflexion erfährt. Für ein bidirektionales Datenübertragungssystem, wie es auch für die Powerline Communications in einem Kraftfahrzeug angestrebt wird, ist dies eine wichtige Voraussetzung. Allerdings ist hierbei zu beachten, dass die Serienwiderstände $Z_{Serie}$ auch zusätzliche Verluste für die Datensignale darstellen.

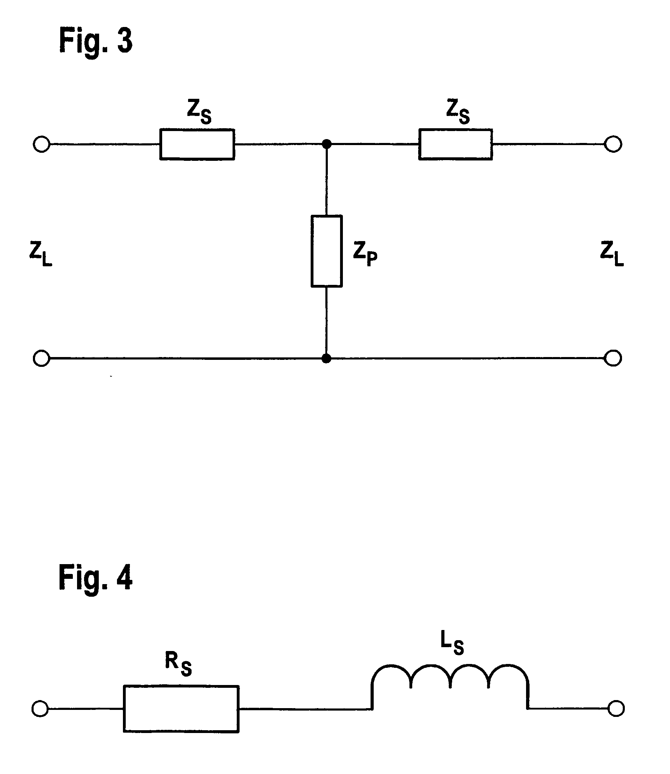

Mit Hilfe eines symmetrischen T-Glieds (vgl. Figur 3) können die weiteren Parameter einer n-Verzweigung mit modifiziertem Sternpunkt errechnet werden. Vergleicht man Figur 2 mit Figur 3, so entspricht die parallele Impedanz $Z_p$ der Parallelschaltung aus (n -2) abgeschlossenen Versorgungsleitungszweigen des Sternpunktes. Da jeder Zweig direkt am Sternpunkt einen zusätzlichen Serienwiderstand $Z_{Serie}$ besitzt, errechnet sich die Impedanz pro Zweig $Z^*_{Zweig}$ aus:

$$Z^*_{Zweig} = Z_L + Z_{serie} \qquad (7)$$

Hierbei wird natürlich vorausgesetzt, dass die Versorgungsleitungen jeweils mit ihren Wellenwiderständen abgeschlossen sind. Somit lässt sich die parallele Impedanz $Z_p$ angeben und mit Hilfe von Gleichung (6) entsprechend umformen zu:

$$Z_p = \frac{Z_L + Z_{serie}}{n-2} = Z_L \cdot \frac{2}{n} \cdot \frac{n-1}{n-2} \qquad f\ddot{u}r \ n \geq 2 \qquad (8)$$

Die serielle Impedanz $Z_S$ entspricht dem Serienwiderstand $Z_{Serie}$ und kann mit Gleichung (6) wie folgt angegeben werden:

$$Z_s = Z_L \cdot \frac{n-2}{n} \qquad f\ddot{u}r \ n \geq 2 \qquad (9)$$

Die n-Verzweigung mit einem modifizierten Sternpunkt entspricht einem n-Tor. Für die Messung linearer Netzwerke ist es jedoch ausreichend, jeweils nur die
Signalübertragung zwischen zwei Toren zu vermessen und die anderen Tore reflexionsfrei abzuschließen. Durch die Messung an jedem möglichen Paar von Toren kann somit die komplette S-Matrix eines beliebigen n-Tors bestimmt werden. Da in Figur 2 dieser Sachverhalt gegeben ist (sämtliche weiteren Tore sind mit ihrem Wellenwiderstand abgeschlossen und in der parallelen Impedanz $Z_p$ zusammengefasst) und zusätzlich noch alle Zweige - wie bereits erläutert - die gleiche Struktur aufweisen, können die S-Parameter des kompletten n-Tors leicht angegeben werden zu:

$$s_{ij} = \begin{cases} 0 & f\ddot{u}r \ i=j \\ \frac{1}{n-1} & f\ddot{u}r \ i \neq j \end{cases} \quad mit \ i,j \in \{1,\dots,n\}; n \geq 2 \qquad (10)$$

Hieraus zeigt sich die geforderte Reflexionsfreiheit an den ausschlaggebenden Parametern $s_{ii}$.

Betrachtet den modifizierten Sternpunkt unter dem Aspekt der Powerline Communications im Kraftfahrzeug, so verursacht der zusätzlich eingebaute Serienwiderstand $Z_{Serie}$ Verluste bei Gleichspannungsanwendungen. Da diese jedoch nicht tragbar sind (erhöhter Energieverbrauch bei Gleichspannungsanwendungen), müssen für die Realisierung des modifizierten Sternpunktes andere Bauteile verwendet werden. Die Anforderungen an solche Bauteile entsprechen frequenzabhängigen Widerständen, die bei einer Frequenz von 0 Hz einen Widerstandswert von 0 Ohm und in dem für die Informationsübertragung über die Versorgungsleitungsstruktur interessanten Frequenzbereich von oberhalb 100 MHz einen Widerstandswert von $Z_{Serie}$ besitzen. Hier bietet sich der Einsatz des magnetischen Werkstoffes Ferrit an.

Die Impedanz Z einer Spule berechnet sich zu:

$$Z = j \cdot 2\pi f \cdot L \qquad (11)$$

Dabei ist L die Induktivität der Spule, die sich widerum aus der Induktivität der zugehörigen Luftspule $L_0$ und der Permeabilitätszahl $\mu_r$ des Spulenkerns zusammensetzt.

$$L = \mu_r \cdot L_0 \qquad\qquad (12)$$

Die Permeabilitätszahl $\mu_r$ ist u.U. eine komplexe Größe. Dies ist zumindest dann der Fall, wenn sich die Hystereseschleife zu einer messbaren Fläche öffnet. Die Permeabilitätszahl $\mu_r$ setzt sich dann aus Real- und Imaginärteil zusammen, wobei der imaginäre Anteil die magnetischen Kernverluste wiedergibt. Die allgemeine Schreibweise, die vor allem bei kleiner Ansteuerung und sinusförmigen Magnetisierungsbedingungen gilt, lautet:

$$\mu_r = \mu_r' - j \cdot \mu_r'' \qquad\qquad (13)$$

Setzt man Gleichung (12) und Gleichung (13) in Gleichung (11) ein, so erhält man die allgemeine Impedanz Z einer Spule:

$$Z = j \cdot 2\pi f \left(\mu_r' - j \cdot \mu_r''\right) \cdot L_0 = j \cdot 2\pi f \cdot \mu_r' \cdot L_0 + 2\pi f \cdot \mu_r'' \cdot L_0 \qquad\qquad (14)$$

wobei $L_S = \mu_r' \cdot L_0$ und $R_S = \mu_r'' \cdot L_0$

Dabei setzt sich Gleichung (14) als Summe aus Blindwiderstand und Ohmschem Verlustwiderstand zusammen. In einem Ersatzschaltbild kann die Spule also als Reihenschaltung von Ohmschem Widerstand $R_S$ und idealer Spule $L_S$ aufgefasst werden (vgl. Figur 4). Die jeweiligen Komponenten können aus Gleichung (14) ermittelt werden. Dabei stellt der Ohmsche Widerstand $R_S$ den Verlustterm der realen Spule dar.

Bei magnetischen Werkstoffen werden mit einer über das sogenannte Rayleigh-Gebiet (Hystereseschleifen werden durch schmale, lanzettenförmige Hystereseschleifen, d.h. durch zwei Parabelbögen, angenähert) ansteigenden Feldstärke auch die typischen Verlustmechanismen immer stärker wirksam. Bei Ummagnetisierungsvorgängen in Wechselfeldern mit größeren Amplituden ist mit Keimbildung, Drehprozessen sowie reversiblen und irreversiblen Wandbewegungen zu rechnen. Mit jedem dieser Prozesse wird die Richtung der lokalen Magnetisierung neu eingestellt. Diese verhalten sich jedoch wie mechanische Kreise, die bei einer Änderung des Magnetfeldes zu Präzisionsbewegungen veranlasst werden. Die Bewegungsenergie wird dabei auf andere Spins sowie auf das Gitter verteilt und so in Wärme umgesetzt. Dieser Verlustmechanismus wird als Spinrelaxation bezeichnet. Die Dämpfung der Präzisionsbewegung ermöglicht überhaupt erst die Einstellung einer stationären Polarisationsrichtung in Richtung des äußeren Feldes. Jede Änderung der magnetischen Polarisation durch die Verschiebung von Blochwänden oder durch kohärente Rotation ist zusätzlich ein Anlass für Wirbelströme. Da diese der Ursache entgegenwirken, entsteht eine Verzögerung der Mmagnetisierungsvorgänge. Auch die Wirbelstromrelaxation ist mit zusätzlichen Verlusten verbunden. Diese Relaxationsvorgänge wirken bei der Blochwandverschiebung wie ein Reibungsterm. Aus der Bewegungsgleichung für die Bloch-Wand erhält man schließlich die auf die Anfangspermeabilität $\mu_1$ normierte komplexe Permeabilitätszahl $\mu_r$:

$$\frac{\mu_r}{\mu_i} = \frac{1}{\mu_i} + \frac{1 - \dfrac{1}{\mu_i}}{1 - \omega^2 \cdot \dfrac{m}{\alpha} + j \cdot \omega \cdot \dfrac{\beta_R}{\alpha}} \qquad\qquad (15)$$

In Gleichung (15) ist m die "träge" Masse der Bloch-Wand pro Fläche der Wand und $\beta_R$ die Dämpfungskonstante pro Flächeneinheit, die sich aus dem Beitrag der Spinrelaxation und dem Beitrag der Wirbelstromrelaxation zusammensetzt. $\alpha$ ist eine Bindungskonstante pro Flächeneinheit. Die Wandbewegung entspricht damit einer Schwingung mit der Kreisfrequenz $\omega$. Die schwingende Wand besitzt bei $\omega_0$ eine Resonanzfrequenz

$$\omega_0 = \sqrt{\frac{\alpha}{m}} \qquad\qquad (16)$$

und eine Relaxationskonstante $\omega_c$:

$$\omega_c = \frac{\alpha}{\beta_R} = \frac{1}{\tau} = 2\pi f_c \qquad (17)$$

Für eine geringe effektive Bloch-Wandmasse bzw. für eine niedrige Frequenz bezogen auf die Resonanzfrequenz $\omega_0$ kann man die Annahme $(m \cdot \omega^2 / \alpha) = (\omega^2 / \omega_0^2) \ll 1$ machen und erhält somit für die normierte komplexe Permeablititätszahl $\mu_r$

$$\frac{\mu_r}{\mu_i} = \frac{1}{\mu_i} + \frac{1 - \dfrac{1}{\mu_i}}{1 + j \cdot \dfrac{f}{f_c}} \qquad (18)$$

für hohe Frequenzen $(f \gg f_c)$ gilt die Annahme $f^2/f_c^2 \gg 1$. Daraus folgt aus der Gleichung (18):

$$\frac{\mu_r'}{\mu_i} \approx \frac{1}{\mu_i} + \frac{1 - \dfrac{1}{\mu_i}}{\dfrac{f^2}{f_c^2}} \qquad (19)$$

und

$$\frac{\mu_r''}{\mu_i} \approx \frac{1 - \dfrac{1}{\mu_i}}{\dfrac{f^2}{f_c^2}} \cdot \frac{f}{f_c} = \left(1 - \frac{1}{\mu_i}\right) \cdot f_c \cdot \frac{1}{f} \qquad (20)$$

Setzt man schließlich Gleichung (19) und Gleichung (20) in Gleichung (14) ein, so erhält man die Komponenten der verlustbehafteten Spule für hohe Frequenzen $(f \gg f_c)$ :

$$L_S = L_0 \left(1 + \frac{f_c^2}{f^2} \cdot (\mu_i - 1)\right) \qquad (21)$$

und

$$R_S = 2\pi f_c \cdot (\mu_i - 1) \cdot L_0 = const \cdot (f) \qquad (22)$$

Betrachtet man das Ergebnis des Serienersatzwiderstandes $R_S$ der verlustbehafteten Spule, so ist dessen Frequenzabhängigkeit nur im unteren Frequenzbereich zu erkennen (vgl. Gleichung (14)). Dabei ist bei der Frequenz $f=0$ Hz der Serienersatzwiderstand $R_S=0$ Ohm, d.h. bei Gleichspannungsanwendungen kann man von einer nahezu verlustlosen Spule ausgehen. In Frequenzbereichen weit oberhalb der Frequenz $F_C$ ist der Serienersatzwiderstand $R_S$ bzgl. der Frequenz quasi konstant und größer als Null (vgl. Gleichung (22)). In diesem Frequenzbereich treten Ohmsche Verluste bzw. Dämpfungen auf.

Der Blindwiderstand $X_S$ einer verlustbehafteten Spule ergibt sich für hohe Frequenzen (f>>f$_c$) zu:

$$X_S = 2\pi f \cdot L_0 \left( 1 + \frac{f_c^2}{f^2} \cdot (\mu_i - 1) \right) \qquad (23)$$

Dabei kann der Blindwiderstand der zugehörigen Luftspule im ersten Summanden im Allgemeinen vernachlässigt werden. Vergleicht man unter diesen zusätzlichen Annahmen den Ohmschen Verlustwiderstand $R_S$ (vgl. Gleichung (22)) mit dem Blindwiderstand $X_S$ (vgl. Gleichung (23)) für hohe Frequenzen f>>f$_c$, so lässt sich erkennen, dass $R_S$>>$X_S$ gilt.

Das heisst der Wirkanteil der Verlustbehafteten Spule ist für hohe Frequenzen f>>f$_c$ wesentlich höher als der Blindanteil. Daher kann der Blindwiderstand bei hohen Frequenzen vernachlässigt werden.

Unter Verwendung von Ferriten wurde ein Demonstrationsaufbau einer erfindungsgemäßen Versorgungsleitungsstruktur basierend auf dem modifizierten Sternpunkt durchgeführt. Für die oben besprochenen Serienwiderstände $Z_{Serie}$ werden Ferrit-Hülsen (oder Alternativferrit-Perlen oder Doppellochkern-Ferrite) über die einzelnen Versorgungsleitungslitzen gestülpt.

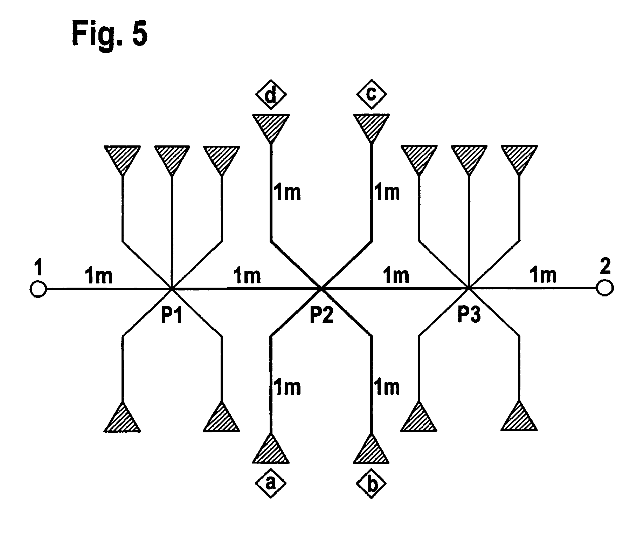

Die in Figur 5 dargestellte erfindungsgemäße Versorgungsleitungsstruktur besteht aus drei modifizierten Sternpunkten. Dazu werden außerdem zwei unterschiedliche twisted-pair-Leitungen (Leiterquerschnitt 0,75mm$^2$ und 2,5mm$^2$) verwendet. Die unterschiedlichen Leiterquerschnitte der beiden Leitungen sind in Figur 5 durch unterschiedliche Strichstärken angedeutet. Sternpunkt P2 stellt den Hauptverzweigungspunkt dar. Dieser kann die Aufgabe eines zentralen Sicherungskastens übernehmen. Von ihm aus gehen Abzweige in unterschiedliche Richtungen zu untergeordneten Verzweigungen (Sternpunkt P1 und Sternpunkt P3). Diese untergeordneten Verzweigungen können in einem Kraftfahrzeug z.B. in den Türen, im Kofferraum usw. eingebaut werden. Von dort aus versorgen sie die in diesem Bereich eingebauten Steuergeräte bzw. Endgeräte mit Energie und Informationen (in der Tür z.B. die Zentralverriegelung, den elektrischen Fensterheber, den elektrisch verstellbaren Außenspiegel und Bedienelemente). Anstatt der Abschlüsse a, b, c und d in Figur 5 kann jeweils eine weitere untergeordnete Verzweigung angeschlossen werden. Da es sich hierbei durchweg um modifizierte Sternpunkte handelt, würden diese Erweiterungen die Übertragungsfunktion der Struktur aus Figur 5 (von Sternpunkt P1 nach Sternpunkt P2) nicht beeinflussen.

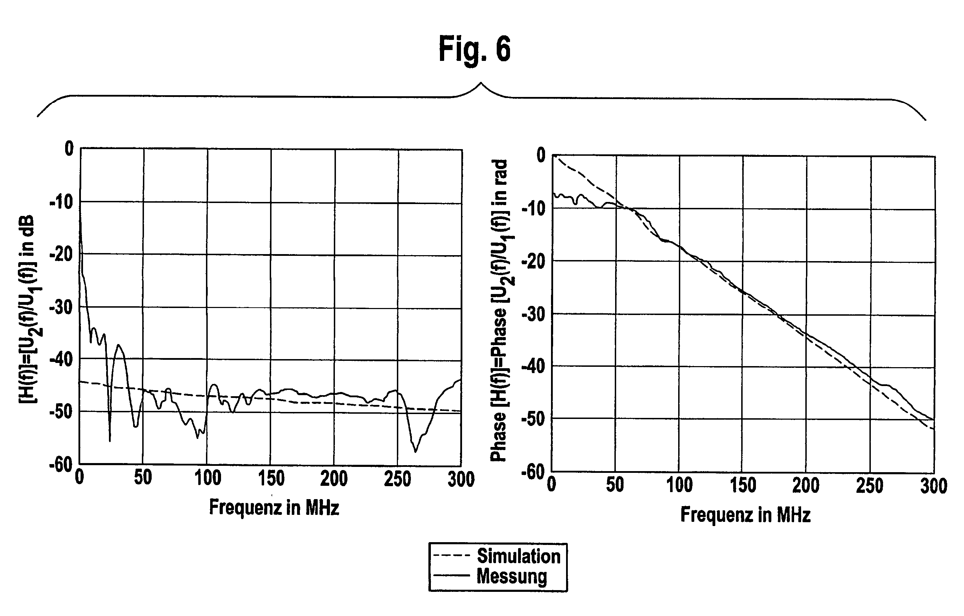

Die modifizierten Sternpunkte wurden wie schon erwähnt mit den Doppellochkern-Ferriten hergestellt. Die Übertragungsfunktion dieser Struktur ist in Figur 6 dargestellt. Dabei wurde sowohl die Messkurve als auch eine mit einem Simulationswerkzeug ermittelte Simulationskurve in dem Diagramm dargestellt.

Wie man in Figur 6 erkennen kann, weichen die Messergebnisse bei einigen Frequenzbereichen relativ stark von den Ergebnissen der Simulation ab. Im unteren Frequenzbereich bis ca. 50 MHz ist dies darauf zurückzuführen, dass in der Simulationfrequenz unabhängige Serienwiderstände für den modifizierten Sternpunkt verwendet wurden, während im Messaufbau Ferrite als Serienwiderstände eingesetzt wurden. Die anderen Abweichungen sind u.a. auf Störungen zurückzuführen. Da sich der um 50 dB gedämpfte Signalpegel sicherlich im Bereich der Störpegel befindet, werden diese Störungen nun auch in der Übertragungsfunktion sichtbar. Die Abweichungen können auch dadurch begründet sein, dass beim realen modifizierten Sternpunkt keine absoluten Eigenreflexionsfreiheit erreicht werden kann. Daher würden mehrfach Reflexionen auftreten, die sich aber im Allgemeinen in einem periodischen Verhalten in der Übertragungsfunktion zeigten. Da dies aber hier nicht der Fall ist, kann davon ausgegangen werden, dass die Ausbildung von Mehrfachreflexionen weitgehend unterbunden wird. Trotz dieser Abweichung zwischen Simulation und Messung ist bei der Messung ein Trend erkennbar, der mit der Simulation übereinstimmt. Dies trifft besonders in dem für die Powerline Communications besonders wichtigen Frequenzbereich zwischen 100 MHz und 250 MHz zu. In diesem Frequenzbereich kann gesagt werden, dass der Dämpfungsverlauf der Übertragungsfunktion annähern konstant und der Phasenverlauf annähernd linear ist. Daher werden sich in diesem Bereich die linearen Verzerrungen auf dem Übertragungskanal in akzeptablen Grenzen halten.

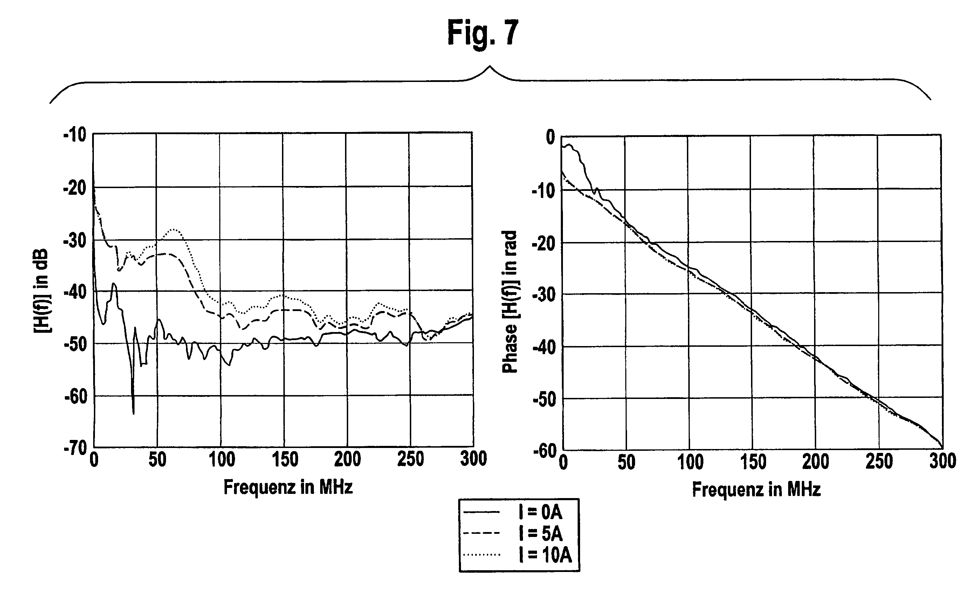

In Figur 7 ist das Verhalten der Übertragungsfunktion der erfindungsgemäßen Versorgungsleitungsstruktur in Abhängigkeit von der Gleichstrombelastung dargestellt. Hierzu wurde eine Frontscheinwerfereinheit eines Fahrzeugs der gehobenen Mittelklasse an die erfindungsgemäße Sternstruktur angeschlossen und mit Gleichstrom versorgt. Es ergaben ich in Figur 7 dargestellten Kurvenscharen der Übertragungsfunktion und des Phasenverlaufs.

Betrachtet man den Phasenverlauf der Übertragungsfunktion aus Figur 7, so ist in einem Frequenzbereich oberhalb von 50 MHz eine annähernde Linearität zu erkennen. Dabei gestaltet sich der Phasengang in diesem Bereich weitgehend unabhängig von der Gleichstrombelastung. Lediglich im Dämpfungsverlauf ist eine Abhängigkeit von der Gleichstrombelastung auch in diesem Frequenzbereich festzustellen. Allerdings erweist sich die Abhängigkeit in einem Frequenzbereich oberhalb von 150 MHz weitaus geringer als bei Frequenzen unterhalb von 100 MHz. Außerdem kann der Dämpfungsverlauf in kleineren Frequenzbändern als jeweils annähernd konstant angenommen werden. Im Frequenzbereich zwischen 180 MHz und 220 MHz ist zudem eine weitgehende Unabhängigkeit von der Gleichstrombelastung vorzufinden. In diesem Frequenzbereich kann eine Übertragung von Informationen über die Versorgungsleitungsstruktur (Powerline Communications) stattfinden, ohne dass die Informationssignale lineare Verzerrungen erfahren.

**Patentansprüche**

1. Leitungsstruktur zur Übertragung von Informationen zwischen elektrischen Komponenten eines Kraftfahrzeugs, die über Leitungen miteinander verbundenen sind, wobei die Leitungen in einer Sternstruktur mit mindestens einem Sternpunkt und mehreren in diesen einlaufenden Leitungszweigen angeordnet sind, der oder jeder Sternpunkt eine Impedanz aufweist, die dem wellenwiderstand der einzelnen in ihn einlaufenden Leitungszweigen entspricht, an dem oder jedem Sternpunkt in den einlaufenden Leitungszweigen ein zusätzlicher Serienwiderstand ($Z_{serie}$) angeordnet ist, der unterhalb einer Grenzfrequenz frequenzabhängig ist, der bei einer Frequenz 0 Hz einen sehr kleinen Widerstandswert und der in einem Frequenzbereich von oberhalb der Grenzfrequenz einen Widerstandswert von $Z_{serie}$ aufweist, **dadurch gekennzeichnet, dass** die Leitungen der Struktur als Versorgungsleitungen einer Vorsorgungsleitungsstruktur zur Energieversorgung der elektrischen Komponenten ausgebildet sind, dass der Serienwiderstand ($Z_{serie}$) eine Grenzfrequenz von 100 MHz aufweist, dass die Informationsübertragung über die Versorgungsleitungsstruktur in einem Frequenzbereich oberhalb von 100 MHz erfolgt und dass sich der wert des zusätzlichen Serienwiderstands ($Z_{serie}$) an einem Sternpunkt aus der Gleichung

$$Z_{serie} = Z_L \cdot \frac{n-2}{n}$$

ergibt, wobei $Z_L$ ein Wellenwiderstand ist, mit dem die Leitungszweige abgeschlossen sind, und n die Anzahl der Leitungszweige ist.

2. Leitungsstruktur nach Anspruch 1, **dadurch gekennzeichnet, dass** der Serienwiderstand ($Z_{serie}$) als mindestens eine Ferrithülse ausgebildet ist, die im Bereich des Sternpunkts um die Versorgungsleitung herum angeordnet ist..

**Claims**

1. Line structure for transmitting information items between electrical components in a motor vehicle, which are connected to one another via lines, wherein the lines are arranged in a star structure with at least one neutral point and a plurality of line branches coming into said neutral point, the or each neutral point has an impedance which corresponds to the characteristic impedance of the individual line branches coming into said neutral point, an additional series impedance ($Z_{series}$) is arranged at the or each neutral point in the incoming line branches, which series impedance is frequency-dependent below a limit frequency, has a very low impedance value at a frequency of 0 Hz and an impedance value of $Z_{series}$ in a frequency range above the limit frequency, **characterized in that** the lines of the structure are in the form of supply lines of a supply line structure for supplying energy to the electrical components, **in that** the series impedance ($Z_{series}$) has a limit frequency of 100 MHz, **in that** the information transmission takes place via the supply line structure in a frequency range above 100 MHz, and **in that** the value of the additional series impedance ($Z_{series}$) at a neutral point results from the following equation

$$Z_{series} = Z_L \cdot \frac{n-2}{n} ,$$

where $Z_L$ is a characteristic impedance with which the line branches are terminated, and n is the number of line branches.

2. Line structure according to Claim 1, **characterized in that** the series impedance ($Z_{series}$) is in the form of at least one ferrite sleeve, which is arranged in the region of the neutral point around the supply line.

**Revendications**

1. Structure de lignes pour la transmission d'informations entre les composants électriques d'un véhicule automobile, lesquels sont reliés entre eux par le biais de lignes, les lignes étant disposées en une structure en étoile comprenant au moins un point commun et plusieurs branches de ligne qui convergent vers celui-ci, le ou chaque point commun présentant une impédance qui correspond à l'impédance caractéristique de chacune des branches de ligne qui convergent vers lui, une résistance série ($Z_{serie}$) supplémentaire étant disposée sur le ou chaque point commun dans les branches de ligne convergentes, laquelle est dépendante de la fréquence au-dessous d'une fréquence limite, laquelle présente une très faible valeur de résistance à une fréquence de 0 Hz et laquelle présente une valeur de résistance de $Z_{serie}$ dans une plage de fréquences au-dessus de la fréquence limite, **caractérisée en ce que** les lignes de la structure sont réalisées sous la forme de lignes d'alimentation d'une structure de lignes d'alimentation pour l'alimentation en énergie des composants électriques, que la résistance série ($Z_{serie}$) présente une fréquence limite de 100 MHz, que la transmission d'informations s'effectue par le biais de la structure de lignes d'alimentation dans une plage de fréquences au-dessus de 100 MHz et que la valeur de la résistance série ($Z_{serie}$) supplémentaire en un point commun est obtenue à partir de l'équation

$$Z_{serie} = Z_L \cdot \frac{n-2}{n},$$

$Z_L$ étant une impédance caractéristique avec laquelle est terminée la branche de ligne et n étant le nombre de branches de ligne.

2. Structure de lignes selon la revendication 1, **caractérisée en ce que** la résistance série ($Z_{serie}$) est réalisée sous la forme d'au moins un manchon en ferrite qui est disposé à proximité du point commun autour de la ligne d'alimentation.

## Fig. 1

EP 1 288 078 B1

Fig. 2

**Fig. 3**

**Fig. 4**

# Fig. 5

Fig. 6

Fig. 7

**EP 1 288 078 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9221180 A
- DE 19703144 C2
- DE 3936894 A1
- DE 4235616 A1